# EUROPÄISCHE PATENTANMELDUNG

(11) **EP 2 644 315 A1**
(43) Veröffentlichungstag der Anmeldung: **02.10.2013**
(21) Anmeldenummer: 13075026.8
(22) Anmeldetag: 14.03.2013
(51) Int. Cl.: B23Q 1/00, B23Q 3/06, B23Q 3/08

(54) **Autarke elektrohydraulische Werkstückspannvorrichtung**

(30) Priorität: 28.03.2012 DE 102012006354
(71) Anmelder: HOHENSTEIN Vorrichtungsbau und Spannsysteme GmbH, 09337 Hohenstein-Ernstthal (DE)
(72) Erfinder: Franzki, Michael, 09337 Hohenstein-Er. (DE)
(74) Vertreter: Grosse, Ulrich

(57) **Zusammenfassung**

2.1 Für eine bedienarme und anwendungssichere Werkstückspannung sind Spannvorrichtungen (1) mit hydraulischen Spannkomponenten (1.10) und mit spezifischen Komponenten zur Zu- und Anführung der Werkstücke (1.6) in und aus deren Spannposition ausgestattet, z.B. mit Greifern (2)

2.2 In Greifern (2) aufgenommene oder geklemmte Werkstücke (1.6) sind mittels einer Handlings- oder Schiebe-Einrichtung (2.2) zu einer Spannvorrichtung (1) hin und von dieser zurück bewegbar. Plane Auf- und Anlageflächen, gewölbte zylindrische Flächen oder Flächen- und Köntaktelemente-Kombinationen in der Art von Steckverbindungen bilden jeweils eine positions- und wiederholgenaue Kontaktstelle (3) von Greifer (2) und Spannvorrichtung (1). Diese Sonderkupplungen für elektrische Leitungen zur Elektroenergieversorgung und Informationsübertragung (3.3 und 3.4) sichern eine autarke elektrohydraulische Funktion der Spannvorrichtung (1).

## Beschreibung

Die Erfindung geht von dem im Oberbegriff des Patentanspruches 1 definierten Gegenstand aus, wobei das Zu-und Abführen der Werkstücke in und aus der Spannposition bedienarm und anwendungssicher mittels eines werkstückangepassten Greifers erfolgt.

In DIN 6300: 2009-04 wird der Begriff "Vorrichtung" als ein Fertigungsmittel definiert, mit dem mindestens ein Werkstück während eines formändernden Fertigungsverfahrens, beispielsweise Bohren und Fräsen, in einer bestimmten Lage zum Werkzeug gerichtet, positioniert und fixiert ist. Eine darin genormte auf Vorrichtungen zutreffender Art der Spannkrafterzeugung, ist die Anwendung von "Hydraulik-Drucköl". Deneben steht der Begriff "elektro" auch für eine Antriebsart der Spannkrafterzeugung, nämlich des elektromotorischen Antriebes der Hydraulik-Drucköl-Pumpe.

Ergänzend definiert die Eigenschaft "autark" die von einer spanenden Werkzeugmaschine unabhängig betreibbare eletromotorisch angetriebene Hydraulik-Drucköl-Pumpe, die in der Werkstückspannvorrichtung integriert und damit selbstversorgend ausgebildet ist.

Derartige vorrichtungsintegrierte Ausbildungen und Anordnungen von Elektrohydraulik-Druckerzeugern sind bereits Gegenstand von in DE 10 2010 013 053 B3, in DE 10 2011 117 776.4 und von ergänzend in DE 20 2012 001 540.0 beschriebenen Werkstückspannvorrichtungen. Diese sind für eine Anwendung in hydraulikfreien Bohr-Fräs-Bearbeitungszentren oder auf Kompakt-Werkzeugmaschinen, die ohne eine maschinenintegrierte Hydraulikversorgung ausgestattet sind, für ihren elektromotorischen Antrieb des in die Werkstückspannvorrichtung integrierten hydraulischen Druckerzeugers mit einer gesonderten Elektroversorgung ausgestattet.

Bei hydraulikfreien Bohr-Fräs-Bearbeitungszentren wird diese, von einem elektrisch betätigten und geschwenkten Rundtisch aus, über eine Elektro-Drehdurchführung in der Maschinenpalette oder im Maschinentisch in die Grundplatte der Werkstückspannvorrichtung hinein geführt oder sie ist bei hydraulikfreien Kompakt-Werkzeugmaschinen als eine oben oder freihängend angeordnete Elektroleitung ausgebildet.

Die Hydraulik-Freiheit und die energiesparenden Hydraulikkonzepte von bestimmten Bohr-Fräs-Bearbeitungszentren führen zur Einsparung von Elektroenergie beim Betreiben dieser Maschinen, die sonst für die Fluidkreisläufe von Hydraulik in den Werkzeugmaschinen benötigt würde. Dem gegenüber ist ein, wenn auch nur geringer Elektroenergie-Mehrverbrauch bei autarken elektrohydraulischen Werkstückspannvorrichtungen für die mit elektrischer Kleinspannung betriebenen vorrichtungsintegrierte Spanndruckerzeugung sowie für die sensorischen Auflage-und Spannkontrollen und für die Informationsübertragungen zu erwarten. Diesen Vorteilen stehen zum Teil aufwändige und unsichere Leitungsführungen zur und in den Spannvorrichtungen gegenüber.

Ergänzend zu energieeffizienten Vorrichtungsanwendungen stellt sich deshalb der Erfindung die Aufgabe, weitere vorrichtungsbezogene Lösungsmerkmale für eine darüber hinausgehende Ausbildung und Anwendung von Leitungsführungen zu finden, mit denen autark elektrohydraulische Werkstückspannvorrichtungen bedienarm und anwendungssicher auszubilden sind.

Der im Patentanspruch 1 angegebenen Erfindung liegt deshalb die Problemstellung zu Grunde, eine autarke elektrohydraulische Werkstückspannvorrichtung mit spezifischen Komponenten auszustatten, durch die neben der Werkstückspannung und der bedienarmen Werkstück-Zufuhr und - Abfuhr auch eine zweckmäßige und anwendungssichere autarke Elektroenergieversorgung und Informationsübertragung realisierbar ist. Zu prüfen war, inwieweit Werkstückgreifer, die mittels Roboter als Handlingseinrichtungen oder mittels Schiebezuführeinrichtungen für das Werkstückhandling an Spannvorrichtungen bewegbar sind und im Ergebnis einer geeigneten Schnittstellenausbildung, die Übertragung an elektrische elektronische und hydraulische Funktionskomponenten, sauber und anwendungssicher übernehmen können und damit für eine intelligente Spannung der Werkstücke nutzbar ist.

Diese Problemstellung wird durch den Patentanspruch 1 gelöst. Der Spannkörper eine autarken elektrohydraulischen Werkstückspannvorrichtung bildet mit einem Greifer in der Endstellung seiner Werkstückzuführungsbewegung und in der Anfangsstellung seiner Werkstückabführbewegung eine konstante positions- und wiederholgenaue Kontaktstelle. Diese Kontaktstellen sind als planflächige Auf- und Anlageflächen, als gewölbte zylindrische Flächen einer Führungssäulen- und Führungsbuchsen-Lagerstelle oder einer Passbolzen-Aufnahmebuchsen-Verbindung jeweils gegeneinander verriegelbar und gleich- bzw. parallelachsig zur Zu- und Abführungsbewegungsrichtung beweglich ausgebildet. Eine Ausbildungsvariante dazu ist eine Flächen- und Kontaktelemente- Kombination in der Art einer Steckverbindung. Jede dieser Kontakstellen ist eine Sonderkopplung für elektrische Leitungsverbindungen. Mit dieser werden die in der Handlings- oder Schiebeeinrichtung des Greifers gehaltenen Elektroversorgungs- und Informationsübertragungsleitungen für den Elektroantrieb einer Hydraulik-Druckerzeugungsanlage den Sensorbetrieb der Werkstückauflage und der Werkstückspannung und für Informationsübertragungen der Ge- und Entspanntzustände auf der Spannvorrichtung gehalten. Damit sind die benannten Funktionskomponenten autark mit Elektroenergie in Kleinspannung versorgt und steuerbar. Gleichzeitig sind bei gelöster Leitungsverbindung der Hydraulik-Druckerzeuger und die sensorische Informationsfeststellung aus- und abstellbar.

Weitere Ausstattungen der Erfindung sind in den Patentansprüchen 2 und 3 angegeben. Sie betreffen die Anordnung von
- federnden Dämpfungselemten,
- die Verriegelbarkeit und
- die Zu- und Abschaltbarkeit von Elektroenergie
an den Kontakstellen.

Die Erfindung ist in zwei Ausführungsbeispielen in den Figuren vereinfacht dargestellt und im folgenden Teil der Beschreibung näher erläutert. Im einzelnen zeigen
- Fig. 1: eine Vorderansicht und
- Fig. 2: eine Teilansicht in Pfeilrichtung nach Fig. 1 einer Spannvorrichtung mit einem Greifer, der durch eine Handlingseinrichtung bewegt ist,
- Fig. 3: eine Vordereinsicht und
- Fig. 4: eine Draufsicht nach Fig. 3 auf eine Spannvorrichtung mit einem von einer Schiebeeinrichtung bewegten Greifer,
- Fig. 5: eine Vorderansicht auf eine Spannvorrichtung mit Greifer

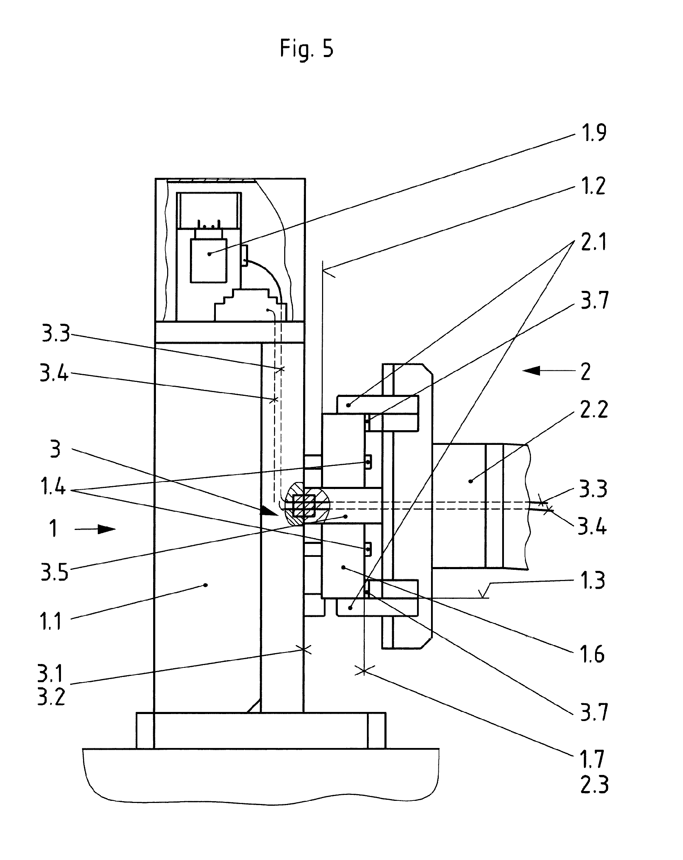

Die autarke elektrohydraulische Werkstückspannvorrichtung, wie sie in den Fig. dargestellt ist, besteht im wesentlichen aus dem Vorrichtungskörper 1.1. Er ist in Fig. 5 als ein einstückiger Formkörper, der nach den Kriterien des Struktur-Leichtbau gestaltet ist, dargestellt. Er besteht aus einem Winkel-Teil mit einer Spannwand, die an ihrer Werkstückseite mit einer Grundplatte verbunden ist und aus einem Doppel-T-Teil, welches sich aus einer Stützrippe für die Spannwand, aus einer Kopfplatte mit einer Blechhaube und aus einer Grundplatte zusammengesetzt ist. Auf und an der Kopfplatte sind die Funktionskomponenten, ein Kleinspannungs-Antriebsmotor, eine Kleinstvolumen-Hydraulikpumpe, die Vorrichtungssteuerung sowie die nicht dargestellten Hydraulik-Leitungen, mit der Blechhaube eingehaust, angeordnet. Die dargestellten Elektroenergie-Versorgungsleitungen 3.3 und Informationsübertragungsleitungen 3.4 werden über die Handlingseinrichtung 2.2 und den Greifer 2 mit den in der Kopfhaube angeordneten Funktionskomponenten des elektrohydraulischen Eigenantriebes der autarken Hydraulik-Druckerzeugungsanlage 1.9 für die Spannvorrichtung funktionsverbunden. An der Werkstückseite der senkrechten Spannwand ist ein rechtkantiges und groß dimensioniertes Werkstück 1.6, mit seiner Werkstück-Auflageseite auf drei sensorisch kontrollierbaren Werkstückauflagen 1.2 auf- und anliegend sowie mit drei Hydraulik-Spannkomponenten 1.4, ebenfalls sensorisch kontrollierbar gespannt.

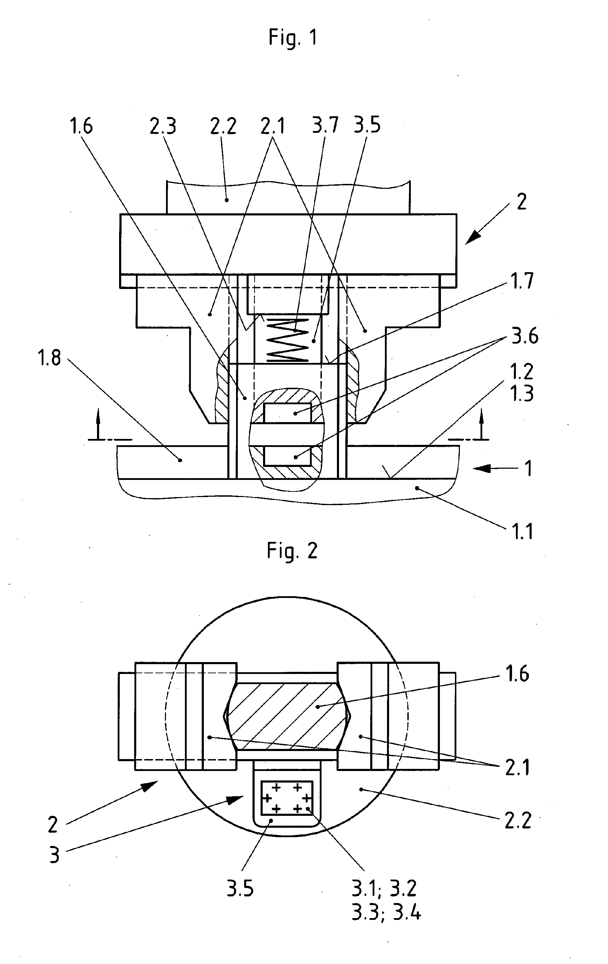

Die in Fig. 1 und 2 dargestellte Anwendung eines Greifers 2 an dem Vorrichtungskörper 1.1 einer autarken elektrohydraulischen Werkstückspannvorrichtung wird mittels einer Handlingseinrichtung 2.2 so betätigt, dass das ergriffene Werkstück 1.6 senkrecht gerichtet bewegt, aufgesetzt und abgehoben werden kann.

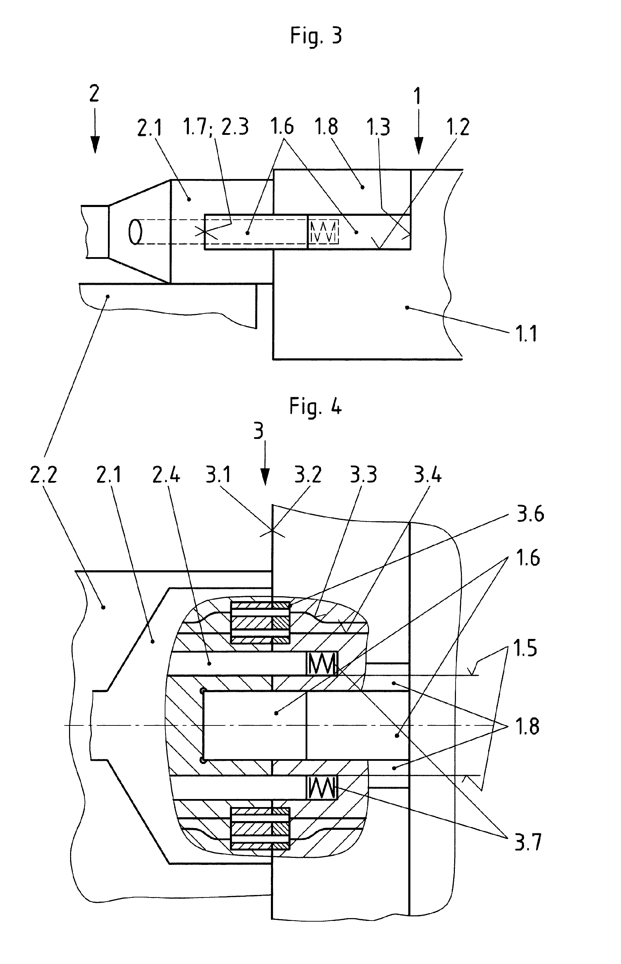

In Fig. 3 und Fig. 4 ist eine Anwendung einer autarken elektrohydraulischen Werkstückspannvorrichtung, wobei stirnseitig an dem Vorrichtungskörper 1.1 ein Greifer 2 auf einer Schiebeeinrichtung 2.2 aufliegt, dargestellt ist. Die Einzelkomponeten der Spannvorrichtung 1 sind außerdem Werkstückauflagen 1.2, Werkstückanlagen 1.3 und Führungsschienen 1.8 für die zugeführten Werkstücke 1.6. Diese liegen mit ihrer Stirnfläche 1.7 in der Greiferrachen-Innenseite 2.3 an und werden so vom Greifer 2 verschoben.

Eine wesentliche Funktionskomponente der in Fig. 1 bis 5 dargestellten Komponenten-Kombination von autarker elektrohydraulischer Werkstückspannvorrichtung, hier insbesondere der Vorrichtungskörper 1.1 einerseits und dem von einer Handlings- und Schiebeeinrichtung 2.2 bewegten und gehaltenen Greifers 2, ist die Kontaktstelle 3. Diese wird durch die Kontaktfläche 3.1 am Vorrichtungskörper 1.1 und durch die Kontaktfläche 3.2 sowie durch Kontaktelemente 3.5 und 3.6, die sowohl am Greifer 2 wie auch am Vorrichtungskörper 1.1 vorhanden sind und gemeinsam mit Dämpfungselementen 3.7 eine oder mehrere ver- und entriegelbare Sonderkupplungen bilden, ausgebildet. Diese Kontaktstellen 3 sind beispielhaft
- in Fig. 1,2 und Fig. 5 als ein seitlich am Greifer 2 neben und außerhalb der Greiferbacken 2 angeordnetes Kontaktelement 3.5 mit stirnseitigen, mit den Vorrichtungskörper 1.1 korrespondierenden, steckverbindungsartigen Kontaktelementen 3.6 und den Stift-/Säulen-Elementen, die in die Buchsen des Gegenstückes ragend, flächig und förmig kontaktieren und positionieren.
- und in den Fig. 3 und 4 als in die stirnseitigen Kontaktflächen 3.2 am Greifer 2 passend zu der Kontaktfläche 3.1 am Vorrichtungskörper 1.1 korrespondierend angeordneten Führungssäulen 2.4, in passende Aufnahmebohrungen 1.5 der Vorrichtungskörper 1.1 ragende und steckverbindungsartige Kontaktelemente 3.6.
dargestellt.

Über die Kontaktstelle 3, die die autarke elektrohydraulische Werkstückspannvorrichtung 1 mit dem Greifer 2 bildet, entsteht eine Schnittstelle für eine optimierte aus wenigen gekoppelten Leitungen bestehende Elektroenergieversorgung und Informationsübertragung, deren Ziel die Energieeffizienz bei der spanenden Teilefertigung und bei der Werkstückspannung sowie eine hohe Bedienersicherheit ist.

### Bezugszeichenliste

| | | |
|---|---|---|
| 1 | Spannvorrichtung | |
| 1.1 | Vorrichtungskörper | |
| 1.2 | Werkstückauflage | |
| 1.3 | Werkstückanlage | |
| 1.4 | Spannkomponenten | |
| 1.5 | Aufnahmebohrungen | in 3.6 |
| 1.6 | Werkstück(e) | |
| 1.7 | Stirnfläche(n) | von 1.6 |
| 1.8 | Führungsschienen | für 1.6 |
| 1.9 | autarke Hydraulik-Druckerzeugungsanlage | |
| 2 | Greifer | |
| 2.1 | Greiferbacken | |
| 2.2 | Handlings- oder Schiebe-Einrichtung | für 2 |
| 2.3 | Greiferrachen-Innenseite | |
| 2.4 | Führungssäulen | |
| 3 | Kontaktstelle | |
| 3.1 | Kontaktfläche | von 1 |
| 3.2 | Kontaktfläche | von 2 |
| 3.3 | Elektroenergie-Versorgungsleitung(en) | |
| 3.4 | Informationsübertrags-Leitung(en) | |
| 3.5 | Kontaktelement | an 2 |
| 3.6 | Kontaktelemente | von 3 |
| 3.7 | Dämpfungselement | |

## Patentansprüche

1. Autarke elektro-hydraulische Werkstückspannvorrichtung, wobei das Zu- und Abführen der Werkstücke in und aus der Spannposition in der Spannvorrichtung mittels eines Greifers einer Handlings- oder einer Schiebeeinrichtung erfolgt, **dadurch gekennzeichnet,**
**dass** ein Greifer (2) in der Endstellung seiner Werkstückzuführungsbewegung und in der Anfangsstellung seiner Werkstückabführbewegung an der Spannvorrichtung (1) mindestens eine konstant positions- und wiederholgenau verbleibende Kontaktstelle (3) bildet, deren beiden Kontaktflächen (3.1 und 3.2) oder Kontaktelemente (3.5 und 3.6) als
- plane Auf- und Anlageflächen,
- als gewölbte zylindrische Flächen einer Führungssäulen- und Führungsbuchsen-Lagerstelle oder einer Passbolzen-Aufnahmebuchsen-Verbindung jeweils gegeneinander verriegelbar und gleich- bzw. parallelachsig zur Zu- und Abführbewegungsrichtung beweglich oder
- als eine Flächen- und Kontaktelemente-Kombination in der Art einer Steckverbindung
ausgebildet sind,
**dass** jede Kontakstelle (3) eine Sonderkupplung für elektrische Leitungsverbindungen ist, mit der die, über und in einer Handlings- oder Schiebe-Einrichtung (2.2) gehalterten Elektroversorgungs- und Informationsübertragungsleitungen (3.3 und 3.4) für den
- Elektro-Antrieb einer Hydraulik-Druckerzeugungsanlage (1.9)
- Sensor-Betrieb der Werkstückauflage und der Werkstückspannung und für
- Informations-Übertragungen der Gespannt- und Entspanntzustände auf und in der Spannvorrichtung (1) autark mit der zugeführten Elektroenergie in Kleinspannung versorgt und damit steuerbar sind und
**dass** mit der nach Beginn der Abführbewegung des Greifers'(2) gelösten Leitungsverbindung an der Kontaktstelle (3) zwischen Greifer (2) und Spannvorrichtung (1) die Aus- und Abstellung der zugeführten Elektroenergie und damit des Hydraulik-Druckerzeugers und der sensorischen Informationsfeststellung steuer- und feststellbar ist.

2. Autarke elektrohydraulische Werkstückspannvorrichtung nach Patentanspruch 1, **dadurch gekennzeichnet,**
**dass** die Kontaktierung des Greifers (2) in der Endstellung seiner Werkstückzuführbewegung an der Spannvorrichtung (1) an beider Kontaktstelle (3) wahlweise durch federnde Dämpfungselemente (3.7) erfolgt, die
- zwischen Greiferrachen-Innenseite (2.3) und der rückseitigen Stirnfläche (1.7) des im Greifer (2) gehaltenen Werkstückes (1.6) oder
- zwischen den bewegten Führungssäulen (2.4) des Greifers (2) und den Aufnahmebohrungen (1.5) eines Kontaktelementes (3.6) in der Spannvorrichtung (1)
stirnseitig angeordnet sind.

3. Autarke elektrohydraulische Werkstückspannvorrichtung nach Patentanspruch 1 und 2, **dadurch gekennzeichnet,**
**dass** der Greifer (2) in seiner kontaktierenden Stellung an der Spannvorrichtung (1), gemeinsam mit dieser, ver- und entriegelbar ist und
**dass** erst nach Erreichen und bereits vor Verlassen der Kontaktstelle (3) an der Spannvorrichtung (1) durch den Greifer (2) die zugeführte Elektroenergie zu- und abschaltbar ist.
